# EUROPÄISCHE PATENTSCHRIFT

(11) **EP 1 470 754 B1**
(45) Veröffentlichungstag und Bekanntmachung des Hinweises auf die Patenterteilung: **05.03.2008**
(21) Anmeldenummer: 03009255.5
(22) Anmeldetag: 23.04.2003
(51) Int. Cl.: A22C 7/00, A23P 1/00

(54) **Verfahren zum Herstellen von Fleischportionen in einer Umformpresse**
Method for producing meat portions in a forming press
Procédé pour produire des portions de viande dans une presse de formage

(43) Veröffentlichungstag der Anmeldung: 27.10.2004
(73) Patentinhaber: Nienstedt GmbH, 45721 Haltern (DE)
(72) Erfinder: Groneberg-Nienstedt, Petra, 40237 Düsseldorf (DE)
(74) Vertreter: COHAUSZ DAWIDOWICZ HANNIG & SOZIEN

(56) Entgegenhaltungen:
- WO-A-00/57732
- DE-A- 4 122 570
- FR-A- 2 616 299
- US-A- 3 728 136
- US-A- 5 569 070

## Beschreibung

Die Erfindung betrifft ein Verfahren zum Herstellen von Fleischportionen in einer Umformpresse, in der Fleischstücke zwischen einem Ober- und Unterwerkzeug, insbesondere zwischen einer unteren Form und einem Stempel verformt werden.

In der Lebensmittelindustrie besteht die Forderung, gleichgewichtige und gleichgeformte Fleischportionen zu schaffen, die bei gleicher Dicke und gleichem Querschnitt ein automatisches Garen vieler Stücke ermöglicht. Darüber hinaus besteht die Forderung, die fertigen Fleischstücke (Endstücke) optisch so zu gestalten, dass sie bei der Präsentation auf einem Teller groß wirken. Hierzu ist es bekannt, Fleischstücke im nicht gefrorenen Zustand zu walzen und anschließend insbesondere durch einen Wasserstrahlschneider in mehreren Schnitten auf die gewünschte Form zu bringen. Ferner ist es zum Herstellen von Fleischstücken gleichen Gewichts aus der DE 41 22 570 A1 bekannt, Fleischstücke im nicht gefrorenen Zustand in einer Form zu platzieren, dort auf eine bestimmte Höhe zu pressen und das überschüssige Fleisch an einer Seite abzuschneiden. Beide Verfahren führen nicht zu ausreichend formgleichen, formstabilen und massegleichen Endprodukten. Darüber hinaus kommt es beim Walzen von Fleischstücken häufig zu einer zu starken Beanspruchung und damit zu einem Reißen des Fleisches.

Ferner ist es bekannt, ein Fleischstück im gefrorenen Zustand in der Weise zu verformen, dass ein Pressstempel so weit heruntergefahren wird, bis ein bestimmter Druck aufgebaut ist. Hierdurch werden Fleischportionen unterschiedlicher Höhe erzeugt, die unterschiedliche Größen und Gewichte besaßen.

Ferner ist bekannt, ein Fleischstück im gefrorenen Zustand in der Weise zu verformen, dass der Pressstempel mit einer Mulde auf eine definierte Höhe fährt, um einem Stück Fleisch mit einem definierten Gewicht eine andere Form zu geben. Überschüssiges Material, dass aus höhergewichtigerer Eingangsware herrührt, wird an den Seiten unkontrolliert herausgepresst und verbleibt an dem umgeformten Produkt als Pressfahne.

Schließlich ist es aus der WO 00/57732 bekannt, von einem Block gefrorener Lebensmittel kleine Stücke gleichen Volumens abzuschneiden und dann in eine gewünschte Form zu pressen.

Aufgabe der Erfindung ist es, ein Verfahren der eingangs genannten Art so zu verbessern, dass bei geringem technischem Aufwand und geringer Beanspruchung der Fleischstücke exakt gleichgewichtige und gleichgeformte Fleischstücke erhalten werden.

Diese Aufgabe wird erfindungsgemäß dadurch gelöst, dass ein gefrorenes Fleischstück größerer Masse als die des gewünschten Endproduktes zwischen Ober- und Unterwerkzeug gelegt wird, dass zur Erzielung einer Serie stets gleich großer Fleischportionsmassen das Ober- und Unterwerkzeug immer auf den stets exakt selben Zwischenabstand gefahren werden und dass danach aus der hierdurch erzeugten Fleischschicht die in ihrer Randform und ihren Randabmessungen vorbestimmte Fleischportion in der Weise ausgeschnitten, insbesondere ausgestanzt wird, dass die Überstände der Fleischportion allseitig abgeschnitten werden.

Durch dieses Verfahren sind form- und massegleiche Fleischportionen herstellbar, ohne das Fleisch, bzw. die Fasern zu sehr zu beanspruchen. Hierbei sind die erforderlichen technischen Mittel konstruktiv einfach und es kann mit hohen Taktzahlen gearbeitet werden.

Um der Fleischportion zumindest eine gewölbte Seite zu geben wird vorgeschlagen, dass das Unterwerkzeug eine Formmulde aufweist. Darüber hinaus kann aber auch das Oberwerkzeug, insbesondere die Stempelunterseite eine Formmulde aufweisen, so dass zusätzlich oder alternativ auch die andere Portionsseite gewölbt ausgeführt sein kann. Hierbei wird vorzugsweise vorgeschlagen, dass die Ränder beider Mulden deckungsgleich sind.

Besonders vorteilhaft ist das Verfahren anwendbar, wenn die Fleischportionen aus einem Stück bestehen.

In einer Alternative wird zum Herstellen von Fleischstreifen gleicher Höhe und gleicher Breite vorgeschlagen,
- dass ein Fleischstück größerer Masse als die des gewünschten Endproduktes zwischen Ober- und Unterwerkzeug gelegt wird;
- dass zur Erzielung einer Serie stets gleich hoher Fleischportionsmassen das Ober- und Unterwerkzeug immer auf den stets exakt selben Zwischenabstand gefahren werden und
- dass danach aus der hierdurch erzeugten Fleischschicht Fleischportionsstreifen gleicher oder unterschiedlicher Breite geschnitten, insbesondere ausgestanzt werden.

Das Fleisch kann vom Geflügel, Rind, Schwein, Lamm oder auch vom Fisch stammen. Vorzugsweise wird das Verfahren bei Geflügel- oder Fischfleisch angewendet.

Eine besonders exakte und schonende Verformung wird erreicht, wenn die Fleischstücke vor, während und nach dem Verformen und Stanzen sich in einem gefrorenen Zustand befinden. Hierbei können die Fleischstücke eine Eingangstemperatur von vorzugsweise -3 bis -20 Grad Celsius aufweisen.

Vorteilhafte Beispiele des erfindungsgemäßen Verfahrens werden im folgenden näher beschrieben.

Eine Presse weist als Oberwerkzeug einen Stempel und als Unterwerkzeug eine Pressform auf, die vorzugsweise von einem Laufwagen getragen wird. Die Pressform kann eine Mulde besitzen, um dem zu bearbeitenden Fleischstück eine Form zu geben.

Ein Fleischstück mit einer Temperatur von -3 bis -20 Grad Celsius wird als Eingangsstück in die Pressform gelegt, wobei die Masse dieses Eingangsstückes größer (in der Regel erheblich größer) ist als die Masse der fertigen Fleischportion (Endprodukt). Danach wird ein Stempel (Oberwerkzeug) von oben auf das Fleischstück gedrückt, wobei die Unterseite des Stempels parallel zum Rand der Pressform ist. Der Stempel wird soweit nach unten gefahren, bis exakt ein vorbestimmter Abstand zwischen der Unterseite des Stempels und der Form erreicht ist. Hierdurch wird das Fleischstück auf stets exakt dieselbe Dicke gedrückt, wodurch dann das Fleischstück auf allen Seiten seitlich über die Kontur der Form hinaussteht, die die fertige Fleischportion als Endprodukt später haben soll.

Danach wird der Stempel hochgefahren und die Pressform, insbesondere der Laufwagen zu einem Stanzwerkzeug gefahren, das aus der gepressten Fleischstückschicht das Endprodukt ausstanzt. Da in der Presse das Fleischstück stets in die selbe Höhe, bzw. Dicke gebracht wird, kann das Stanzwerkzeug stets eine Fleischportion gleicher Größe und Masse ausstanzen.

Die Pressform kann eine Mulde besitzen. Statt dessen kann alternativ oder zusätzlich auch der Stempel in seiner Unterseite eine Mulde bilden um der Fleischportion ein- oder beidseitig eine gewölbte Form zu geben. In dem Fall in dem sowohl die Pressform, als auch der Stempel eine Mulde besitzen sind die Ränder beider Mulden deckungsgleich ausgeführt.

Als Fleisch kann tierisches Fleisch wie Geflügel, Rind, Schwein, Lamm oder Fisch verwendet werden. Besonders vorteilhaft ist das Verfahren bei Geflügel- oder Fischfleisch anwendbar.

Um Fleischstreifen gleicher Höhe und Breite zu erzeugen wird das gefrorene Fleisch auf eine ebene Fläche des Unterwerkzeugs ohne Mulde gelegt, wobei auch die Stempelfläche eben und ohne Mulde ist. Nachdem das Fleischstück zu einem Stück durchgängig gleicher Höhe gepresst ist, wird dieses zu gleich breiten oder unterschiedlich breiten Streiten geschnitten, insbesondere gestanzt. Auch hier wird das Oberwerkzeug stets auf denselben vorbestimmten Abstand zum Unterwerkzeug gefahren.

Bei allen Verfahren weist das Unterwerkzeug eine größere Fläche auf als die Fläche des Eingangsmaterials, so dass das Fleisch während des Pressens rundum genügend Platz hat sich auszudehnen.

Ferner kann während des Stanzens ein erneutes Formen (Nachformen) erfolgen, wenn das Stanzwerkzeug gleichzeitig ein Presswerkzeug zwischen den Stanzrändern (Stanzschneiden) ist, indem der Bereich zwischen den Stanzrändern tiefer liegt als die außen liegenden Bereiche.

## Patentansprüche

1. Verfahren zum Herstellen von Fleischportionen in einer Umformpresse, in der Fleischstücke im gefrorenen Zustand zwischen einem Ober- und Unterwerkzeug insbesondere zwischen einer unteren Form und einem Stempel verformt werden, **dadurch gekennzeichnet,**
- **dass** ein Fleischstück größerer Masse als die des gewünschten Endproduktes zwischen Ober- und Unterwerkzeug gelegt wird;
- **dass** zur Erzielung einer Serie stets gleich großer Fleischportionsmassen das Ober- und Unterwerkzeug immer auf den stets exakt selben Zwischenabstand gefahren werden und
- **dass** danach aus der hierdurch erzeugten Fleischschicht die in ihrer Randform und ihren Randabmessungen vorbestimmte Fleischportion in der Weise ausgeschnitten insbesondere ausgestanzt wird, dass die Überstände der Fleischportion allseitig abgeschnitten werden.

2. Verfahren nach Anspruch 1, **dadurch gekennzeichnet, dass** das Unterwerkzeug eine Formmulde aufweist.

3. Verfahren nach Anspruch 1 oder 2, **dadurch gekennzeichnet, dass** das Unterwerkzeug eine größere Fläche aufweist als die Fläche des Eingangsmaterials.

4. Verfahren nach einem der vorherigen Ansprüche, **dadurch gekennzeichnet, dass** das Oberwerkzeug, insbesondere die Stempelunterseite eine Formmulde aufweist.

5. Verfahren nach Anspruch 2 und 4, **dadurch gekennzeichnet, dass** die Ränder beider Mulden deckungsgleich sind.

6. Verfahren nach einem der vorherigen Ansprüche, **dadurch gekennzeichnet, dass** die Fleischportionen jeweils aus einem Stück bestehen.

7. Verfahren nach einem der vorherigen Ansprüche, **dadurch gekennzeichnet,**
- **dass** ein Fleischstück größerer Masse als die des gewünschten Endproduktes zwischen Ober- und Unterwerkzeug gelegt wird;
- **dass** zur Erzielung einer Serie stets gleich hoher Fleischportionsmassen das Ober- und Unterwerkzeug immer auf den stets exakt selben Zwischenabstand gefahren werden und
- **dass** danach aus der hierdurch erzeugten Fleischschicht Fleischportionsstreifen gleicher oder unterschiedlicher Breite geschnitten, insbesondere ausgestanzt werden.

8. Verfahren nach einem der vorherigen Ansprüche, **dadurch gekennzeichnet, dass** das Fleisch Geflügel- oder Fischfleisch ist.

9. Verfahren nach einem der vorherigen Ansprüche, **dadurch gekennzeichnet, dass** die Fleischstücke vor, während und nach dem Verformen und Stanzen sich in einem gefrorenen Zustand befinden.

10. Verfahren nach Anspruch 9, **dadurch gekennzeichnet, dass** die Fleischstücke eine Eingangstemperatur von -3 bis -20 Grad Celsius aufweisen.

11. Verfahren nach einem der vorherigen Ansprüche, **dadurch gekennzeichnet, dass** während des Stanzens ein erneutes Formen (Nachformen) des Fleischstückes erfolgt.

## Claims

1. Method for producing meat portions in a forming press, in which pieces of meat in the frozen state are shaped between a upper and lower tool, particularly between a lower mould and a die, **characterised in that**,
- a piece of meat with a greater mass than that of the desired end product is put between the upper and lower tool;
- to obtain a series of meat portions, which always have exactly the same mass, the upper and lower tools are always moved to exactly the same distance away from each other and
- then the meat portion with its predetermined shape and dimensions is cut out, particularly stamped out, from the layer of meat produced like this in such a way that the excess from the meat portion is cut away on all sides.

2. Method according to claim 1, **characterised in that** the lower tool has the shape of a basin.

3. Method according to claim 1 or 2, **characterised in that** the lower tool has a larger area than the area of the initial material.

4. Method according to one of the previous claims, **characterised in that** the upper tool, particularly the lower of the die, has the shape of a basin.

5. Method according to claim 2 and 4, **characterised in that** the edges of both basins are congruent.

6. Method according to one of the previous claims, **characterised in that** the meat portions each consist of one piece.

7. Method according to one of the previous claims, **characterised in that**
- a piece of meat with a greater mass than that of the desired end product is placed between the upper and lower tool;
- to obtain a series of meat portions, which always have exactly the same mass, the upper and lower tool are always moved to exactly the same distance away from each other and
- then meat portions in strips with the same or varying width are cut out, particularly stamped out, from the layer of meat produced like this.

8. Method according to one of the previous claims, **characterised in that** the meat is poultry or fish.

9. Method according to one of the previous claims, **characterised in that** the pieces of meat are in a frozen state before, during and after shaping and stamping.

10. Method according to claim 9, **characterised in that** the pieces of meat have an initial temperature of - 3 to - 20° Celsius.

11. Method according to one of the previous claims, **characterised in that** the piece of meat is shaped again (subsequent shaping) during stamping.

## Revendications

1. Procédé pour produire des portions de viande dans une presse de formage, dans laquelle des pièces de viande sont formées dans l'état congelé entre un outil inférieur et un outil supérieur, en particulier entre un moule inférieur et un piston, **caractérisé en ce que**
- une pièce de viande de masse plus élevée que celle du produit fini souhaité est placée entre l'outil inférieur et l'outil supérieur ;
- l'outil inférieur et l'outil supérieur sont toujours amenés au même écartement intermédiaire exact pour obtenir une série de masses de portions de viande de dimensions constamment égales et
- à partir de la couche de viande ainsi produite, la portion de viande prédéfinie dans sa forme et ses dimensions de bordure est découpée, en particulier découpée à la matrice, de manière que les parties en excès de la portion de viande sont découpées de tous côtés.

2. Procédé suivant la revendication 1, **caractérisé en ce que** l'outil inférieur présente une auge de formage.

3. Procédé suivant l'une des revendications 1 et 2, **caractérisé en ce que** l'outil inférieur présente une surface plus importante que la surface de la matière d'entrée.

4. Procédé suivant l'une des revendications précédentes, **caractérisé en ce que** l'outil supérieur, en particulier le côté inférieur du piston, présente une auge de formage.

5. Procédé suivant les revendications 2 et 4, **caractérisé en ce que** les bords des deux auges sont coïncidents.

6. Procédé suivant l'une des revendications précédentes, **caractérisé en ce que** les portions de viande sont constituées chacune d'une pièce.

7. Procédé suivant l'une des revendications précédentes, **caractérisé en ce que**
- une pièce de viande de masse plus élevée que celle du produit fini est placée entre l'outil inférieur et l'outil supérieur ;
- l'outil inférieur et l'outil supérieur sont toujours amenés au même écartement intermédiaire exact pour obtenir une série de masses de portions de viande de hauteur constamment égale et
- à partir de la couche de viande ainsi produite, des bandes de portions de viande de largeur égale ou différente sont découpées, en particulier découpées à la matrice.

8. Procédé suivant l'une des revendications précédentes, **caractérisé en ce que** la viande est de la viande de volaille ou de la chair de poisson.

9. Procédé suivant l'une des revendications précédentes, **caractérisé en ce que** les pièces de viande se situent dans un état de congélation avant, pendant et après le formage et le découpage.

10. Procédé suivant la revendication 9, **caractérisé en ce que** les pièces de viande présentent une température d'entrée de -3 à -20° Celsius.

11. Procédé suivant l'une des revendications précédentes, **caractérisé en ce qu'**un nouveau formage (post-formage) de la pièce de viande s'effectue pendant le découpage.
